Europäisches Patentamt

European Patent Office

Office européen des brevets

(11) Publication number: **0 206 456**
**A2**

## (12) EUROPEAN PATENT APPLICATION

(21) Application number: **86302448.5**

(22) Date of filing: **02.04.86**

(51) Int. Cl.⁴: **G11B 20/00 , G11B 20/02**

---

(30) Priority: **20.06.85 US 747016**

(43) Date of publication of application:
**30.12.86 Bulletin 86/52**

(84) Designated Contracting States:
**AT BE CH DE FR GB IT LI LU NL SE**

(71) Applicant: **CONSOLIDATED ELECTRONICS LTD.**
**15A Andersons Road**
**Thornbury 3071 Victoria(AU)**

(72) Inventor: **Kay, Peter David**
**140 Watsons Road**
**Glen Waverley Victoria(AU)**

(74) Representative: **Thiemann, Peter Albert William et al**
**LLOYD WISE, TREGEAR & CO. Norman House 105-109 Strand**
**London WC2R 0AE(GB)**

---

(54) **Automatic phase correction of stereo tape replay apparatus.**

(57) A phase correction device and method is disclosed for use in a stereo tape recording replay apparatus, particularly in cartridge type apparatus, the recording adapted to be broadcast or recorded in mono-compatible format including a phase coherence detector device for detecting the mono component in a stereo recording and determining any apparent timing error between channels as seen by the replay apparatus, delaying the channel signal by a fixed amount on one hand and an adjustable amount on the other hand dependent upon the magnitude of said time error whereby the apparent timing error existing between the channels is avoided to prevent cancellation or severe attenuation of the resulting mono signal at certain frequencies.

Fig.1

# AUTOMATIC PHASE CORRECTION OF STEREO TAPE REPLAY APPARATUS

The present invention relates to phase correction between channels or tracks of a stereo tape recording subject to broadcast in mono-compatible format.

Background to Invention

Phase errors between channels of a stereo tape recording do present a problem for all broadcasters wishing to transmit to mono receivers.

All stereo broadcasts are broadcast in a mono-compatible format so that mono receivers can still decode the stereo broadcast. Mono-compatible audio is generated by simply adding the right and left channels together before transmitting.

If, for some reason, a phase error of 180 degrees occurs, complete cancellation of the mono channel will occur. This effect can also occur if there is a time difference between the channels. However, in this case only one particular frequency will be cancelled totally and frequencies around the cancelled frequency will be severely attenuated.

If time (phase) errors are significant, the resulting "mono" signal will sound "muddy" with a distinct loss in all the high frequencies.

In tape recorders "phase" errors are generally "time" errors. The problem has a mechanical origin caused by mis-adjustment or mechanical "drifts" caused by poor head and tape alignment.

The net effect of the problem is that, when a tape is replayed, the signal reaches one head either early or late, causing a time error between the two channels. The error is first noticeable at higher frequencies where the time error approaches half the recorded wave-length (180 degrees).

Example: The wave-length of 15kHz recorded at 7.5 inches /sec. is 0.0005 inches, thus the half-wave time is 33 microseconds, so that an error of 33 millionths of a second will cause a 15kHz signal to be completely cancelled.

Such errors manifest themselves in other ways such as during re-recording onto mono tape the cancelled wave-length is not recorded. This problem has been addressed by producing mechanical adjustment devices which are effective in minimising phase errors between channels.

Manual and automatic devices are known to the applicant. Furthermore, electronic means are known wherein phase information is recorded or encoded upon a third track. This information can be subsequently decoded when replayed and then used to correct the phase error. A disadvantage of this technique is that it will lead to incompatibility between encoded and un-encoded tapes, such that the user must exclusively use encoded tapes which may lead to the need for re-recording at least part of the user's library onto encoded tapes.

The present invention has for its main objective the provision of a device for phase correction in a stereo tape recording adapted to be broadcast in mono-compatible format wherein the device will correct an apparent time error between two stereo channels or tracks as seen by the tape replay apparatus.

According to the invention there is provided a phase correction device for use in a stereo tape recording replay apparatus, the recording adapted to be broadcast in mono-compatible format, the device including detection means for detecting the mono component in a stereo recording and determining any apparent timing error between channels on the tape as seen by the replay apparatus, means delaying one of the channels or track signals by an adjustable amount dependent upon the magnitude of said time error wherein the adjustable delay time substantially equals said time error to correct said apparent time error.

Conveniently, the other channel or track signals are delayed by a fixed amount. In a preferred form of the invention electronic phase coherence circuitry is provided including means to detect the mono component of a stereo recording to determine the apparent time or phase error, the amount of correction being limited to + or -200 micro-seconds phase error. Thus deliberately recorded "echo" for example in which a phase error of more than 1000 micro-seconds is introduced, is ignored by the circuitry. Other audio signals where there is little or no phase coherence between the channels (for example electronic music) the phase correctors includes means to allow the device to revert to zero correction.

Conversely if mono is recorded on both channels resulting in high phase coherence a full delay correction of up to + or -200 micro-seconds is achievable by the invention. In a typical stereo recording having a phase coherence of the order of 50%, a delay correction of up to + or - 100 micro-seconds is achievable.

The invention will now be described in greater detail having reference to the accompanying circuit diagrams in which:-

Figure 1 is a block diagram illustrating the major features of an automatic phase error correction circuit of a stereo recording in mono-compatible format; and

Figure 2 shows a detailed circuit diagram for automatic phase error correction device.

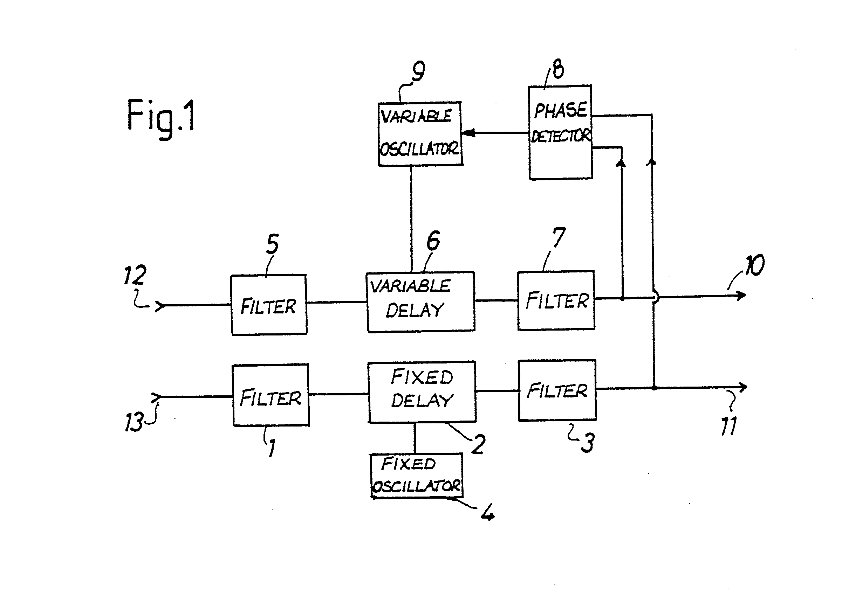

Referring to Figure 1, the block diagram illustrates a pair of input channels 12,13 receiving signals from a twin track stereo recording feeding into a pair of low pass "Anti-Alias" filters 1 and 5 of 20 kHz effective in preventing frequencies above 20 kHz and particularly near the clock frequency - (200 kHz) from passing.

First channel 13 passes to a fixed delay device 2 wherein the signal is delayed by, say, 1200 micro-seconds generated by the fixed oscillator 4 operating at 200 kHz. The output of the fixed delay device 2 is received by second low pass filter of 20 kHz to remove clock frequencies from the delayed audio signal.

Referring to the passage of channel 2 indicated at 12, the output of low pass filter 5 is received by a variable delay device 6 producing a variable delay of between 1000-1400 micro-seconds generated by a voltage controlled oscillator 9 whose frequency range is between 160 to 240 kHz. The output of delay device 6 is received by low pass filter 7. The secondary low pass filters 3 and 7 act to remove switching transients which may be generated by the delay devices 2 and 6.

In operation, the output of the voltage oscillator 9 is controlled directly by the phase error measured by the coherent phase detector 8 which senses both channels at the output of low pass filters 3 and 7. The output of the detector 8 is a D.C. voltage directly proportional to the time error, and this error voltage is used to vary the control voltage of the voltage controlled oscillator 9, which in turn increases or decreases the delay of the variable delay device 6, which will have the effect of reducing the time error between the outputs of low pass filters 3 and 7.

The coherent phase detector is able to detect the mono component of a stereo recording and to determine the time error, if any, that exists between limits of say + or -200 micro-seconds. Thus the amount of correction is limited to errors of + or - 200 micro-seconds so that deliberately recorded echo sounds and electronic music, which usually introduce relatively long delays of between 1000 micro-seconds and 100 milli-seconds, are ignored and passed onto the output 10,11.

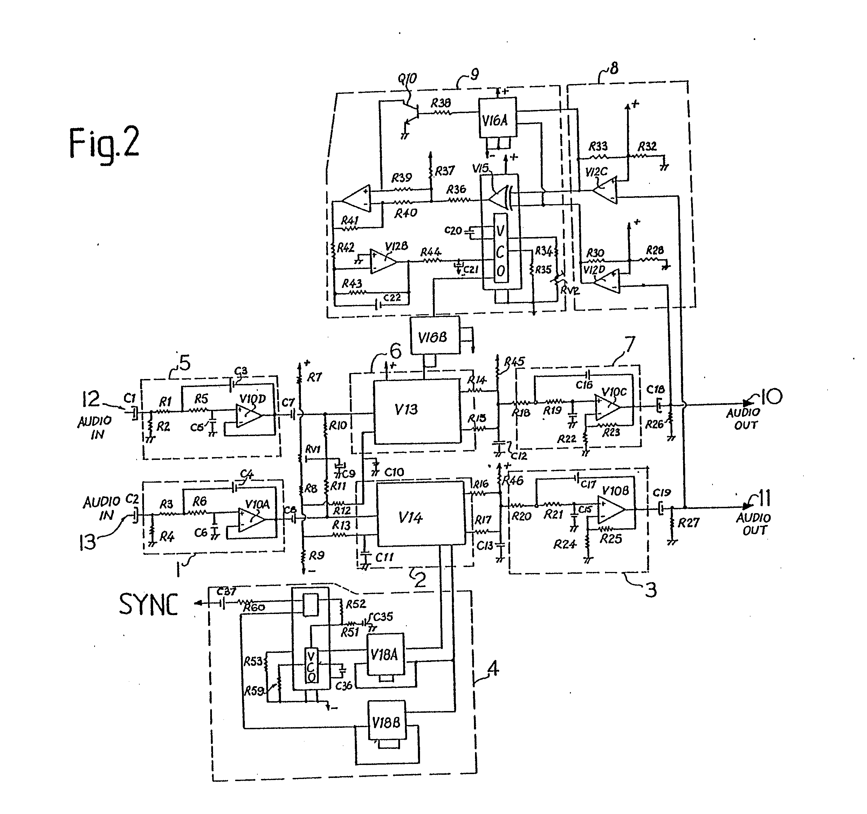

The device will be described in greater detail with reference to the detailed circuit illustrated in Figure 2 wherein the blocks represented in Figure 1 are overprinted in phantom outline.

The "Anti-Alias" low pass filters V10A and V10D prevent frequencies in excess of 20 kHz - (beyond the audio range) from passing. Thus any frequencies at or about the sampling clock frequency of 200 kHz cannot inerfere with the sampling process and thereby introduce noise interference into the taped sound.

The delay devices 2 and 6 comprise electronic charge control devices V13 and V14 where the delay from input to output is controlled by a single clock frequency of say 200 kHz. The device V14 introduces a fixed delay of, say, 1200 micro-seconds generated by "D" latcher components V18A and V18B in fixed oscillator 4. The device V13 introduces a variable delay of say 1000 -1400 micro-seconds supplied by exclusive or gate V15 and "D" latch 16A. The output of the delay devices V13 and V14 are again passed through low pass filters 3 and 7, comprising components V10B and V10C respectively, to remove transients having frequencies of the order of the clock frequency and thereby prevents interference noise.

The output signals are received by the coherent phase detector 8 and includes components V12C and V12D to provide square waves at output, which are in phase synchronism with input thus V12C and V12D act to limit the signal. These limited signals are submitted to a phase comparitor in V15 whose output is a square wave with a mark-space ratio proportional to the phase error. This is the phase error magnitude signal and the "sign" of the error i.e. whether it is leading or lagging is determined by V16A. This sign signal controls an analogue inverter V12A via transistor Q10, so that the output of V12A is directly proportional to the magnitude of the phase error. The output of inverter V12A is filtered by V12B to provide a D.C. control signal to the voltage controlled oscillator V15 whose output frequency is directly proportional to the magnitude of the phase error detected. The component V16B acts to divide the output frequency to provide the necessary bi-phase clocks for the delay device V13(B).

Thus a closed loop control system is used to correct phase errors such that the phase of component V10C is forced to match that of V10B. Or put another way any out of phase component in the mono-compatible signal appearing at components V10D and V10A is brought into phase (or corrected) such that the signal in channels 10 and 11 are substantially of the same phase.

As previously indicated the "phase coherence" circuitry 8 detects the mono component of the stereo recording to determine the time error, however the amount of correction is limited to + or - 200 micro-seconds to prevent the correction sensing deliberately recorded "echo" or electronic music where there is little or no phase coherence.

The circuit is constructed to operate on a dual regulated supply of ± 7.5 volts.

## Claims

1. According to the invention there is provided a phase correction device for use in a stereo tape recording replay apparatus, the recording adapted to be broadcast in mono-compatible format, the device including detection means for detecting the mono component in a stereo recording and determining any apparent timing error between channels on the tape as seen by the replay apparatus, means delaying one of the channels or track signals by an adjustable amount dependent upon the magnitude of said time error wherein the adjustable delay time substantially equals said time error to correct said apparent time error.

2. A device as claimed in claim 1 wherein the signal from the other channel or track is delayed by a fixed amount of time.

3. A device as claimed in claims 1 or 2 including electronic phase coherence circuitry means including detection means for detecting the mono component of a stereo recording to determine the apparent time or phase error within a predetermined error limit whereby errors falling within said limit are corrected.

4. A device as claimed in claim 3 wherein delay correction of errors up to + or -200 microseconds are achieved.

5. A method of correcting phase errors between channels of a stereo tape recording comprising the steps of electronically delaying the transmission of the signal on one channel by a predetermined fixed time delay and the other channel by an adjustable amount such that any phase error apparent between the channels is reduced such that the stereo recording may be broadcast or recorded in mono-compatible format without loss of signal.

Fig.1

# Fig.2